# FASCICULE DE BREVET EUROPEEN

(11) **EP 3 359 847 B1**
(45) Date de publication et mention de la délivrance du brevet: **21.10.2020**
(21) Numéro de dépôt: 16788737.1
(22) Date de dépôt: 07.10.2016
(51) Int. Cl.: F16H 37/04

(54) **ENSEMBLE DE BOITE DE VITESSES POUR VEHICULE AGRICOLE A LARGE GAMME DE VITESSES**
GETRIEBEANORDNUNG FÜR EIN LANDWIRTSCHAFTLICHES FAHRZEUG MIT BREITEM GESCHWINDIGKEITSBEREICH
GEARBOX ASSEMBLY FOR AN AGRICULTURAL VEHICLE WITH BROAD RANGE OF SPEEDS

(30) Priorité: 08.10.2015 FR 1559579
(43) Date de publication de la demande: 15.08.2018
(73) Titulaire: Groupement International de Mécanique Agricole, 60000 Beauvais (FR)
(72) Inventeur: LADRIERE, Pascal, 59550 Fontaine-au-Bois (FR); FOLLIOT, Didier, 60430 Noailles (FR); CUEVAS MELO, Oscar, 60000 Beauvais (FR)
(74) Mandataire: Fédit-Loriot
(86) Numéro de dépôt international: PCT/FR2016/052593
(87) Numéro de publication internationale: WO 2017/060645

(56) Documents cités:
- CN-A- 101 450 609
- DE-A1- 3 414 107
- DE-A1-102013 110 709

## Description

La présente invention se rapporte à un ensemble de boîte de vitesses pour véhicule agricole motorisé.

Les boîtes de vitesses de véhicule agricole motorisé permettent de fournir un grand nombre de rapports de vitesse possibles du véhicule de manière à pouvoir porter ou tracter des appareils de travail dans les conditions optimales par rapport à la nature du sol à travailler. Autrement dit, les boîtes de vitesses permettent d'adapter la vitesse du véhicule aux variations de résistance à l'avancement qu'il rencontre. Au surplus, les boîtes de vitesses récentes comprennent au moins deux arbres d'embrayage parallèles de manière à pouvoir passer d'une vitesse à l'autre sans perte de charge, autrement dit, sans perte de motricité durant le passage de vitesse.

Aussi, les boîtes de vitesses des véhicules agricoles usuels comprennent un grand nombre de rapports de vitesse possibles sur des gammes de vitesse rapprochées.

Or, il est aujourd'hui requis des boîtes de vitesses présentant non seulement un grand nombre de rapports de vitesse possibles, mais aussi sur des gammes de vitesse espacées, de très lentes à très rapides, s'étendant par exemple de quelques centaines de mètres par heure jusqu'à 50 km par heure.

Pour ce faire, il a été imaginé de mettre en oeuvre des systèmes de trains épicycloïdaux en étages à l'intérieur des boîtes de vitesses. En effet, ce système de transmission mécanique permet d'obtenir de grands rapports de réduction, bien qu'il soit relativement compact par rapport aux réducteurs à engrenages usuels.

On pourra se référer au document DE 10 2013 110 709 A1, lequel décrit un ensemble de boîte de vitesses visant précisément à obtenir de larges gammes de vitesse. Il comprend ainsi un système de trains épicycloïdaux étagés couplé en entrée à l'arbre moteur et permettant de fournir une pluralité de premiers rapports de transmission. Le système de trains épicycloïdaux est couplé en sortie à deux dispositifs d'embrayage parallèles. Chacun des dispositifs d'embrayage comporte un arbre d'embrayage d'entrée couplé au système de trains épicycloïdaux et un arbre d'embrayage de sortie. L'ensemble comprend, pour chacun des dispositifs d'embrayage, une grande roue d'embrayage de haute vitesse et une petite roue d'embrayage de basse vitesse montées folles sur l'arbre d'embrayage de sortie de manière à pouvoir fournir deux deuxièmes rapports de transmission. Il comprend également pour chacun des dispositifs d'embrayage, un dispositif d'accouplement d'embrayage pour pouvoir coupler l'une ou l'autre des roues de basse et de haute vitesse avec l'arbre d'embrayage de sortie. En outre, l'ensemble comprend un arbre de sortie comportant une petite roue de sortie de haute vitesse engrenant avec les grandes roues d'embrayage de haute vitesse et une grande roue de sortie de basse vitesse engrenant avec les petites roues d'embrayage de basse vitesse de deux dispositifs d'embrayage. Il est entendu que les roues mentionnées ici sont des roues dentées à engrenages parallèles. Toutefois, l'arbre de sortie est équipé d'un pignon conique engrenant une roue conique, laquelle est couplée mécaniquement à un différentiel.

Grâce à cet ensemble de boîte de vitesses on obtient un véhicule motorisé comprenant un grand nombre de rapports de vitesse sur une large gamme de vitesse. Toutefois, on a pu observer pour certains véhicules, et dans certaines conditions d'utilisation, une usure prématurée des roues d'embrayage. De surcroît, la multitude de trains d'engrenages successifs ou parallèles de tels ensembles de boîte de vitesses, obère leur rendement mécanique.

Aussi, un problème qui se pose et que vise à résoudre la présente invention est de fournir un ensemble de boîte de vitesses qui permettent notamment, de réduire l'usure des éléments qui la composent et aussi d'améliorer le rendement mécanique.

Dans ce but, il est proposé un ensemble de boîte de vitesse pour véhicule agricole motorisé comprenant : un système de trains épicycloïdaux étagés pour fournir une pluralité de premiers rapports de transmission ; un dispositif d'embrayage comportant, un arbre d'embrayage d'entrée couplé audit système de trains épicycloïdaux et un arbre d'embrayage de sortie ; une grande roue d'embrayage de haute vitesse et une petite roue d'embrayage de basse vitesse montées folles sur ledit arbre d'embrayage de sortie pour pouvoir fournir deux deuxièmes rapports de transmission ; un dispositif d'accouplement d'embrayage pour pouvoir coupler l'une ou l'autre desdites roues de basse et de haute vitesse avec ledit arbre d'embrayage de sortie ; et, un arbre de sortie comportant une petite roue de sortie de haute vitesse engrenant avec ladite grande roue d'embrayage de haute vitesse et une grande roue de sortie de basse vitesse engrenant avec ladite petite roue d'embrayage de basse vitesse. L'ensemble d'embrayages comprend en outre un dispositif de découplage entre ledit arbre de sortie et ladite grande roue de sortie de basse vitesse pour pouvoir libérer ledit arbre de sortie de ladite petite roue d'embrayage de basse vitesse.

Ainsi, une caractéristique de l'invention réside dans la possibilité de pouvoir découpler l'arbre de sortie et la grande roue de sortie de basse vitesse, lorsque précisément, l'arbre de sortie est entraîné à haute vitesse par le biais de la petite roue de sortie de haute vitesse engrenant avec la grande roue d'embrayage de haute vitesse. Car en effet, lorsque l'arbre de sortie est entraîné à haute vitesse, la grande roue de sortie de basse vitesse devient menante, et partant, entraîne à grande vitesse la petite roue d'embrayage de basse vitesse, au risque de la détériorer. Le découplage permet ainsi de mettre au repos la grande roue de sortie de basse vitesse et par conséquent, la petite roue d'embrayage de basse vitesse. La petite roue d'embrayage de basse vitesse est ainsi préservée. Au surplus, puisque ces roues sont à l'arrêt, le rendement mécanique de la boîte de vitesses est amélioré.

Selon un mode de réalisation de l'invention préféré, ladite grande roue de sortie de basse vitesse est montée folle sur ledit arbre de sortie. Aussi, ledit dispositif de découplage comprend une roue fixe solidaire dudit arbre de sortie et un organe de couplage solidaire de ladite roue fixe apte à être commandé pour mettre en prise ladite roue fixe et ladite grande roue de sortie de basse vitesse. De la sorte, le dispositif de découplage, constitué de plusieurs éléments, est réversible. Autrement dit, l'organe de couplage est commandable entre une position de couplage de la roue fixe et de la grande roue de sortie de basse vitesse et une position de découplage où la roue de sortie de basse vitesse est libre vis-à-vis de la roue fixe.

En outre, le dispositif d'embrayage comprend un embrayage commandable, par exemple hydrauliquement, lequel est situé entre ledit arbre d'embrayage d'entrée et ledit arbre d'embrayage de sortie. Ainsi, l'arbre d'embrayage d'entrée et l'arbre d'embrayage de sortie sont coaxiaux et l'embrayage commandable est installé entre les deux.

Selon un mode de mise en oeuvre de l'invention particulièrement avantageux, l'ensemble de boîte de vitesses comprend en outre : un autre dispositif d'embrayage comportant, un autre arbre d'embrayage d'entrée couplé audit système de trains épicycloïdaux et un autre arbre d'embrayage de sortie ; une autre grande roue d'embrayage de haute vitesse et une autre petite roue d'embrayage de basse vitesse montées folles sur ledit autre arbre d'embrayage de sortie pour pouvoir fournir deux autres deuxièmes rapports de transmission, lesdites autres grande et petite roues d'embrayage de haute et de basse vitesse engrenant respectivement avec lesdites petite et grande roues de sortie de haute et de basse vitesse ; et, un autre dispositif d'accouplement d'embrayage pour pouvoir accoupler l'une ou l'autre desdites autres roues de basse et de haute vitesse avec ledit autre arbre d'embrayage de sortie.

Autrement dit, l'ensemble de boîte de vitesses comprend deux dispositifs d'embrayage comportant chacun, un arbre d'embrayage d'entrée couplé audit système de trains épicycloïdaux et un arbre d'embrayage de sortie. Chaque dispositif d'embrayage comprend une autre grande roue d'embrayage de haute vitesse et une petite roue d'embrayage de basse vitesse montées folles sur ledit autre arbre d'embrayage de sortie pour pouvoir fournir deux deuxièmes rapports de transmission, lesdites grande et petite roues d'embrayage de haute et de basse vitesse engrenant respectivement avec lesdites petite et grande roues de sortie de haute et de basse vitesse. Ils comprennent également chacun un dispositif d'accouplement d'embrayage pour pouvoir accoupler l'une ou l'autre desdites roues de basse et de haute vitesse avec ledit arbre d'embrayage de sortie.

Ainsi, grâce aux deux dispositifs d'embrayage parallèles, et à leur arbre d'embrayage de sortie équipé chacun d'une grande roue d'embrayage de haute vitesse et d'une petite roue d'embrayage de basse vitesse, on obtient, comme on l'expliquera ci-après, quatre deuxièmes rapports de transmission différents. De la sorte, selon un mode de mise en oeuvre de l'invention particulièrement avantageux, où le système de trains épicycloïdaux étagés fournit sept premiers rapports de transmission, on peut alors obtenir vingt-huit vitesses différentes.

Aussi, ledit autre dispositif d'embrayage comprend un autre embrayage commandable situé entre ledit autre arbre d'embrayage d'entrée et ledit autre arbre d'embrayage de sortie. L'autre embrayage commandable joue le même rôle que le premier dans le premier dispositif d'embrayage.

Selon un mode de réalisation de l'invention particulièrement avantageux, l'ensemble de boîte de vitesses comprend en outre un module inverseur situé entre ledit système de trains épicycloïdaux étagés et ledit dispositif d'embrayage pour pouvoir inverser le sens de rotation dudit arbre d'embrayage d'entrée. Lorsque l'ensemble de boîte de vitesses comprend deux dispositifs d'embrayage, le module inverseur est couplé parallèlement aux deux dispositifs d'embrayage par des moyens que l'on décrira plus en détail dans la suite de la description.

Au surplus, ledit module inverseur comprend d'une part un arbre de réception couplé audit système de trains épicycloïdaux étagés et d'autre part, deux roues d'inversion montées folles sur ledit arbre de réception et deux embrayages d'inversion pour pouvoir alternativement coupler lesdites deux roues d'inversion audit dispositif d'embrayage.

Selon un autre mode de réalisation de l'invention, le module inverseur est situé en amont du système de trains épicycloïdaux étagés. Et, on expliquera plus en détail dans la suite de la description, les conséquences sur l'agencement des différents éléments.

Ainsi, grâce aux deux embrayages d'inversion mettant en prise l'arbre de réception par friction avec l'une ou l'autre des deux roues d'inversion, on passe d'un sens de rotation à un sens inverse plus aisément, et partant, d'une marche avant à une marche arrière de manière plus confortable.

En outre, l'ensemble de boîte de vitesses comprend un module réducteur de transmission situé entre ledit système de trains épicycloïdaux étagés et ledit dispositif d'embrayage pour pouvoir réduire les rapports de transmission de ladite pluralité de rapports de transmission. Un tel module réducteur de transmission permet, soit de transmettre le mouvement de rotation en sortie du système de trains épicycloïdaux étagés sans réduction ni démultiplication au dispositif d'embrayage, soit de réduire considérablement le mouvement de rotation de manière à pouvoir obtenir, des vitesses extrêmement faibles. Un tel réducteur permet par exemple d'obtenir des vitesses de l'ordre de 250 m à l'heure.

Aussi, ledit système de trains épicycloïdaux étagés comprend trois jeux de roues planétaires et trois jeux de roues satellites montés respectivement dans lesdits trois jeux de roues planétaires. On décrira plus en détail le système de trains épicycloïdaux étagés dans la suite de la description. Un tel système mécanique permet en effet d'obtenir pour une vitesse d'entrée donnée, une gamme élargie de rapports de transmission avec un encombrement minimal.

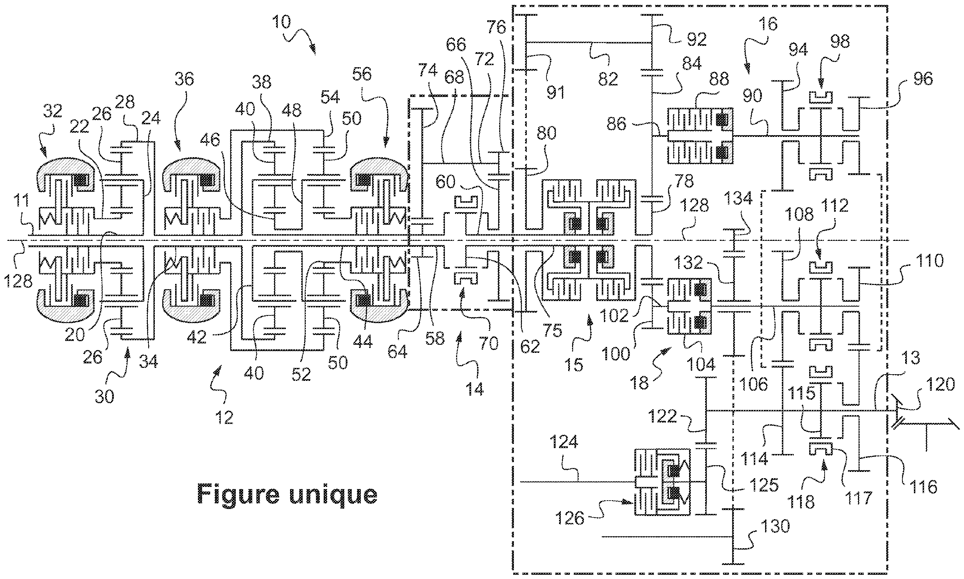

D'autres particularités et avantages de l'invention ressortiront à la lecture de la description faite ci-après d'un mode de réalisation particulier de l'invention, donné à titre indicatif mais non limitatif, en référence au dessin annexé sur lequel :
- l'unique Figure est une vue schématique latérale d'un ensemble de boîte de vitesses conforme à l'invention.

L'unique Figure illustre un ensemble de boîte de vitesses 10 comportant quatre sous-ensembles successifs entre un arbre d'entrée 11 couplé à l'arbre moteur non représenté, et un arbre de sortie 13. L'ensemble de boîte de vitesses 10 comporte ainsi : un système de trains épicycloïdaux étagés 12 ; un module réducteur de transmission 14 ; un module inverseur de marche 15 ; et, deux dispositifs d'embrayage parallèles, un premier 16 et un second 18.

L'arbre d'entrée 11 se prolonge à travers le système de trains épicycloïdaux étagés 12 par un premier tronçon d'arbre creux 20 lequel traverse un premier planétaire intérieur 22 et est lié à un premier porte satellite 24. Ce dernier comprend un premier jeu de satellites 26 engrenant le premier planétaire intérieur 22 et un premier planétaire extérieur 28. Ce premier groupe constitue un premier train épicycloïdal 30.

De surcroît, le système de trains épicycloïdaux étagés 12 comporte un premier dispositif de blocage 32 permettant, dans une position de relâchement, de coupler en rotation le premier planétaire intérieur 22 et le premier porte satellite 24, et dans une position active, de maintenir en position fixe le premier planétaire intérieur 22 tout en libérant le premier porte satellite 24.

Le premier planétaire extérieur 28 est solidaire d'un tronçon d'arbre creux intermédiaire 34 s'étendant coaxialement dans le prolongement du premier tronçon d'arbre creux 20 et traversant un deuxième dispositif de blocage 36 pour rejoindre, symétriquement au premier planétaire extérieur 28, un deuxième planétaire extérieur 38. À l'intérieur de ce deuxième planétaire extérieur 38 engrène un deuxième jeu de satellites 40 porté par un porte satellite 42 solidaire d'un dernier tronçon d'arbre creux 44, lequel s'étend coaxialement dans le prolongement du tronçon d'arbre creux intermédiaire 34.

Le deuxième jeu de satellites 40 engrène également un deuxième planétaire intérieur 46 lequel est solidaire d'un troisième porte satellite 48. Le deuxième planétaire intérieur 46 et le troisième porte satellite 48 sont traversés librement par le dernier tronçon d'arbre creux 44.

Le troisième porte satellite 48 porte un troisième jeu de satellites 50, engrenant avec un troisième planétaire intérieur 52 et un troisième planétaire extérieur 54.

Le deuxième dispositif de blocage 36 permet, dans une position de relâchement, de coupler en rotation le premier planétaire extérieur 28 solidaire du deuxième planétaire extérieur 38 et le troisième planétaire extérieur 54, et dans une position active de maintenir en position fixe le troisième planétaire extérieur 54, tandis que le premier planétaire extérieur 28 et le deuxième planétaire extérieur 38 associés, sont libres.

Le système de trains épicycloïdaux étagés 12 comporte un troisième dispositif de blocage 56 permettant, dans une position de relâchement, de coupler en rotation le dernier tronçon d'arbre creux 44 et le troisième planétaire intérieur 52. Dans une position active, le troisième dispositif de blocage 56 permet de maintenir en position fixe le troisième planétaire intérieur 52, tandis que le dernier tronçon d'arbre creux 44 est libre.

En outre, les, premier 22, deuxième 46 et troisième 52 planétaires intérieurs présentent le même nombre de dents. Il est par exemple compris entre soixante-cinq et soixante-sept dents. S'agissant des satellites des, premier 26, deuxième 40 et troisième 50 jeux de satellites, ils présentent le même nombre de dents, compris par exemple entre dix-sept et dix-neuf dents. Quant aux, premier 28, deuxième 38 et troisième 54 planétaires extérieurs, ils présentent également le même nombre de dents, compris avantageusement entre cent un et cent trois dents.

Ainsi, les trois dispositifs de blocage 32, 36 et 56, commandés chacun par un dispositif hydraulique, sont susceptibles d'être chacun dans deux états, au repos, ou actifs et par conséquent, l'ensemble des trois dispositifs peut être dans huit états distincts. En pratique, sept rapports de transmission sont exploités entre l'arbre d'entrée 11 et le dernier tronçon d'arbre creux 44.

Ainsi, un premier premier rapport de vitesse A, correspond à un état dans lequel le premier dispositif de blocage 32 est au repos, tandis que les deuxième 36 et troisième 56 dispositifs de blocage sont actifs.

Un deuxième premier rapport de vitesse B, correspond à un état dans lequel les premier 32 et troisième 56 dispositifs de blocage sont au repos, tandis que le deuxième dispositif de blocage 36 est actif.

Un troisième premier rapport de vitesse C, correspond à un état dans lequel les premier 32 et deuxième 36 dispositifs de blocage sont au repos, tandis que le troisième dispositif de blocage 56 est actif.

Un quatrième premier rapport de vitesse D, correspond un état dans lequel les, premier 32, deuxième 36 et troisième 56 dispositifs de blocage sont au repos.

Un cinquième premier rapport de vitesse E, correspond un état dans lequel les premier 32 et deuxième 36 dispositifs de blocage sont actifs, tandis que le troisième dispositif de blocage 56 est au repos.

Un sixième premier rapport de vitesse F, correspond à un état dans lequel les premier 32 et troisième 56 dispositifs de blocage sont actifs, tandis que le deuxième dispositif de blocage 36 est au repos.

Et, un septième premier rapport de vitesse G, correspond à un état dans lequel le premier dispositif de blocage 32 est actif, tandis que les deuxième 36, et troisième 56 dispositifs de blocage sont au repos.

Le dernier tronçon d'arbre creux 44 se prolonge à travers le module réducteur de transmission 14 et il se termine par une extrémité de couplage de dernier tronçon 58.

Le module réducteur de transmission 14 présente un tronçon d'arbre creux de réduction 60 qui s'étend coaxialement dans le prolongement du dernier tronçon d'arbre creux 44 jusqu'au module inverseur de marche 15 que l'on décrira ci-après.

Le tronçon d'arbre creux de réduction 60 présente une extrémité de couplage de tronçon de réduction 62 venant s'étendre en regard de l'extrémité de couplage de dernier tronçon 58. De surcroît, l'extrémité de couplage de dernier tronçon 58 comporte en arrière, une petite roue de dernier tronçon de réduction 64, tandis que l'extrémité de couplage de tronçon de réduction 62 comporte en arrière, une grande roue de tronçon de réduction 66 montée folle.

En outre, le module réducteur de transmission 14 comporte, d'une part un organe de couplage en rotation 68 de la petite roue de dernier tronçon de réduction 64 et de la grande roue de tronçon de réduction 66, et d'autre part un dispositif d'accouplement de réduction 70. L'organe de couplage en rotation 68 comprend un axe de réduction 72, s'étendant parallèlement au tronçon d'arbre creux de réduction 60 et au dernier tronçon d'arbre creux 44, lequel axe de réduction 72 comprend d'une part une grande roue d'axe de réduction 74 engrenant la petit roue de dernier tronçon de réduction 64, et d'autre part une petite roue d'axe de réduction 76 engrenant la grande roue de tronçon de réduction 66. Quant au dispositif d'accouplement de réduction 70, il permet d'accoupler, dans une première position, l'extrémité de couplage de dernier tronçon 58 directement avec l'extrémité de couplage de tronçon de réduction 62, et dans une deuxième position, l'extrémité de couplage de tronçon de réduction 62 avec la grande roue de tronçon de réduction 66. Aussi, dans la première position d'accouplement du dispositif d'accouplement de réduction 70, l'extrémité de couplage de dernier tronçon 58 vient directement en prise avec extrémité de couplage de tronçon de réduction 62 sans réduction de vitesse de rotation, tandis que dans la deuxième position d'accouplement, l'extrémité de couplage de tronçon de réduction 62 vient en prise avec la grande roue de tronçon de réduction 66. Et dans cette deuxième position d'accouplement, compte tenu des rapports de diamètre des différentes roues, ou des rapports de dents de ces roues, on obtient une forte réduction de vitesse entre le dernier tronçon d'arbre creux 44 et le tronçon d'arbre creux de réduction 60.

Selon un premier mode de réalisation dans lequel la boîte de vitesses 10 est construite pour pouvoir fournir vingt-un rapports de vitesse, d'une part, la petit roue de dernier tronçon de réduction 64 comporte par exemple entre vingt-cinq et vingt-sept dents, tandis que la grande roue de tronçon de réduction 66 comporte entre cinquante-neuf et soixante-une dents, et d'autre part, la grande roue d'axe de réduction 74 comporte entre soixante et soixante-deux dents, tandis que la petite roue d'axe de réduction 76 en comporte entre treize et quinze.

Selon un second mode de réalisation dans lequel la boîte de vitesses 10 fournit vingt-huit rapports de vitesse, d'une part, la petit roue de dernier tronçon de réduction 64 comporte par exemple entre vingt-un et vingt-trois dents, tandis que la grande roue de tronçon de réduction 66 comporte entre soixante-dix et soixante-douze dents, et d'autre part, la grande roue d'axe de réduction 74 comporte entre soixante-dix et soixante-douze dents, tandis que la petite roue d'axe de réduction 76 en comporte entre vingt-un et vingt-trois.

Le module inverseur de marche 15, reçoit le tronçon d'arbre creux de réduction 60 en entrée, lequel se prolonge par un arbre de réception 75, et il comporte deux roues de sortie d'inversion, une première roue de sortie d'inversion 78 et une deuxième roue de sortie d'inversion 80. Les deux roues de sortie d'inversion 78, 80 sont entraînées en rotation dans le même sens. En revanche, comme on l'expliquera ci-après, la première roue de sortie d'inversion 78 est directement couplée au deux dispositifs d'embrayage parallèles 16, 18, tandis que la deuxième roue de sortie d'inversion 80 y est couplée par l'intermédiaire d'un organe de couplage inverseur 82. Ce dernier comprend une roue d'entrée de couplage inverse 91 engrenant la deuxième roue de sortie d'inversion 80, et une roue de sortie de couplage inverse 92.

La deuxième roue de sortie d'inversion 80 comprend, par exemple, entre soixante-six et soixante-huit dents, et la première roue de sortie d'inversion 78 comprend entre quarante-six et quarante-huit dents, tandis que, la roue d'entrée de couplage inverse 91 comprend entre trente-trois et trente-cinq dents et la roue de sortie de couplage inverse 92 comprend entre vingt-trois et vingt-cinq dents.

On observera que le module réducteur de transmission 14 est optionnel et partant, lorsqu'il n'est pas installé dans l'ensemble de boîtes de vitesses, le dernier tronçon d'arbre creux 44 se prolonge par l'arbre de réception 75 et rejoint ainsi directement le module inverseur de marche 15.

De surcroît, le module inverseur de marche 15 est, selon une variante de réalisation, situé en amont du système de trains épicycloïdaux étagés, et l'arbre d'entrée correspond alors à la sortie de l'inverseur, tandis que l'arbre de réception se prolonge et se termine par une roue correspondant à la première roue de sortie d'inversion 78.

S'agissant du premier dispositif d'embrayage 16, il comprend une première roue d'embrayage d'entrée 84 montée sur un premier arbre d'embrayage d'entrée 86, un premier embrayage commandable 88 et un premier arbre d'embrayage de sortie 90. On observera que la première roue d'embrayage d'entrée 84 engrène à la fois la première roue de sortie d'inversion 78 et la roue de sortie de couplage inverse 92 de l'organe de couplage inverseur 82.

En outre, une première grande roue d'embrayage de haute vitesse 94 est montée folle sur le premier arbre d'embrayage de sortie 90 et une première petite roue d'embrayage de basse vitesse 96 est également montée folle sur le premier arbre d'embrayage de sortie 90. Entre les deux, un premier dispositif d'accouplement d'embrayage 98 est installé sur le premier arbre d'embrayage de sortie 90. Ce premier dispositif d'accouplement d'embrayage 98 est commandable dans une première position où il vient coupler en rotation le premier arbre d'embrayage de sortie 90 avec la première grande roue d'embrayage de haute vitesse 94. Il est également commandable dans une deuxième position dans laquelle il vient coupler en rotation le premier arbre d'embrayage de sortie 90 avec la première petite roue d'embrayage de basse vitesse 96. On observera que le premier dispositif d'accouplement d'embrayage 98 est, au surplus, commandable dans une position neutre, intermédiaire entre la première et la deuxième position, dans laquelle il est libre à la fois avec la première grande roue d'embrayage de haute vitesse 94 et avec la première petite roue d'embrayage de basse vitesse 96.

De surcroît, selon le premier mode de réalisation dans lequel la boîte de vitesses 10 fournit vingt-un rapports de vitesse, les, première roue d'embrayage d'entrée 84, première grande roue d'embrayage de haute vitesse 94 et première petite roue d'embrayage de basse vitesse 96 comprennent, par exemple, respectivement, entre cinquante-neuf et soixante-une dents, entre quarante-six et quarante-huit dents et, entre vingt et vingt-deux dents. S'agissant du second mode de réalisation dans lequel la boîte de vitesses 10 fournit vingt-huit rapports de vitesse, les, première roue d'embrayage d'entrée 84, première grande roue d'embrayage de haute vitesse 94 et première petite roue d'embrayage de basse vitesse 96 comprennent respectivement, entre soixante et soixante-deux dents, entre trente-six et trente-huit dents et, entre vingt et vingt-deux dents.

Parallèlement, le second dispositif d'embrayage 18 comprend : une seconde roue d'embrayage d'entrée 100 montée sur un second arbre d'embrayage d'entrée 102 et engrenant la seule première roue de sortie d'inversion 78, un second embrayage commandable 104 et un second arbre d'embrayage de sortie 106. Un seconde grande roue d'embrayage de haute vitesse 108 est montée folle sur le second arbre d'embrayage de sortie 106, tandis qu'une seconde petite roue d'embrayage de basse vitesse 110 y est montée folle. Entre les deux, un second dispositif d'accouplement d'embrayage 112 est installé sur le second arbre d'embrayage de sortie 106. Il est commandable dans une première position où il couple en rotation le second arbre d'embrayage de sortie 106 avec la seconde grande roue d'embrayage de haute vitesse 108, et dans une deuxième position dans laquelle il vient coupler en rotation le second arbre d'embrayage de sortie 106 avec la seconde petite roue d'embrayage de basse vitesse 110. De manière analogue au premier dispositif d'embrayage 16, le second dispositif d'accouplement d'embrayage 112 est également commandable dans une position neutre, entre la première et la deuxième position, permettant d'obtenir les mêmes effets.

En outre, la roue de sortie de couplage inverse 92 de l'organe de couplage inverseur 82 engrène, sur la Figure, la première roue d'embrayage d'entrée 84, mais elle pourrait tout aussi bien engrener la seconde roue d'embrayage d'entrée 100, sans autre modification pour obtenir la même fonctionnalité.

De plus, selon le premier mode de réalisation dans lequel la boîte de vitesses 10 fournit vingt-un rapports de vitesse, les, seconde roue d'embrayage d'entrée 100, seconde grande roue d'embrayage de haute vitesse 108 et seconde petite roue d'embrayage de basse vitesse 110 comprennent respectivement, entre vingt-cinq et vingt-sept dents, entre quarante-six et quarante-huit dents et, entre vingt et vingt-deux dents. S'agissant du second mode de réalisation dans lequel la boîte de vitesses 10 fournit vingt-huit rapports de vitesse, les, seconde roue d'embrayage d'entrée 100, première grande roue d'embrayage de haute vitesse 108 et première petite roue d'embrayage de basse vitesse 110 comprennent respectivement, entre vingt-quatre et vingt-six dents, entre quarante-quatre et quarante-six dents et, entre vingt-cinq et vingt-sept dents.

Le premier mode de réalisation selon lequel, pour les deux dispositifs d'embrayage 16, 18, les roues d'embrayage de haute vitesse 94, 108 présentent le même nombre de dents tout comme les roues d'embrayage de basse vitesse 96, 110, est avantageux en termes de standardisation. En revanche, la première roue d'embrayage d'entrée 84 du premier dispositif d'embrayage 16 présente un nombre de dents différent de celui de la seconde roue d'embrayage d'entrée 100 du second dispositif d'embrayage 18, de manière à pouvoir fournir des deuxièmes rapports de transmission différents. Un tel dispositif permet de concevoir un même ensemble, roue d'embrayage de haute vitesse/dispositif d'accouplement d'embrayage/petite roue d'embrayage de basse vitesse, et par conséquent à un coût plus avantageux.

On décrira à présent l'arbre de sortie 13 et ses différents modes de liaison avec les deux dispositifs d'embrayage 16, 18. Ainsi, sur l'arbre de sortie 13, est montée une petite roue de sortie de haute vitesse 114 montée fixe, et une grande roue de sortie de basse vitesse 116 montée folle. La petite roue de sortie de haute vitesse 114 engrène à la fois la seconde grande roue d'embrayage de haute vitesse 108 et la première grande roue d'embrayage de haute vitesse 94, tandis que la grande roue de sortie de basse vitesse 116 engrène à la fois la seconde petite roue d'embrayage de basse vitesse 110 et la première petite roue d'embrayage de basse vitesse 96. Aussi, l'arbre de sortie 13 est muni d'un dispositif de découplage 118, comportant une roue fixe 115 solidaire de l'arbre de sortie 13 et un organe de couplage commandable 117. Ce dernier est commandable entre une position de couplage, où il met en prise la roue fixe 115 avec la grande roue de sortie de basse vitesse 116 et partant, dans laquelle il vient coupler en rotation l'arbre de sortie 13 et la grande roue de sortie de basse vitesse 116, et une position de découplage, où la roue fixe 115 est libre de la grande roue de sortie de basse vitesse 116, et par conséquent, dans laquelle la grande roue de sortie de basse vitesse 116 est libre vis-à-vis de l'arbre de sortie 13.

Selon le premier mode de réalisation dans lequel la boîte de vitesses 10 fournit vingt-un rapports de vitesse, les, petite roue de sortie de haute vitesse 114 et, grande roue de sortie de basse vitesse 116, comprennent par exemple, respectivement, entre trente-huit et quarante dents et, entre soixante-dix-sept et soixante-dix-neuf dents. S'agissant du second mode de réalisation dans lequel la boîte de vitesses 10 fournit vingt-huit rapports de vitesse, les, petite roue de sortie de haute vitesse 114 et, grande roue de sortie de basse vitesse 116, comprennent par exemple, respectivement, entre quarante-deux et quarante-quatre dents et, entre soixante-dix-neuf et quatre-vingt-une dents.

Grâce au dispositif de couplage/découplage 118, la grande roue de sortie de basse vitesse 116 et partant, les première et seconde petites roues d'embrayage de basse vitesse 96, 110 peuvent être libérées vis-à-vis de l'arbre de sortie 13, et par conséquent demeurer au repos, lorsque celui-ci est entraîné à grande vitesse par l'intermédiaire de la petite roue de sortie de haute vitesse 114. En pareilles circonstances, c'est le second arbre d'embrayage de sortie 106 et partant, la seconde grande roue d'embrayage de haute vitesse 108 qui provoque l'entraînement de l'arbre de sortie 13, puisque la seconde roue d'embrayage d'entrée 100 présente un plus petit nombre de dents que celui de la première roue d'embrayage d'entrée 84. Ainsi, lorsque le dernier tronçon d'arbre creux 44 est entraîné en rotation à sa vitesse maximale grâce au système de trains épicycloïdaux étagés 12, que le dispositif d'accouplement de réduction 70 est dans la première position d'accouplement, et que le module inverseur de marche 15 est dans une position de marche avant, c'est-à-dire que la première roue de sortie d'inversion 78 est menante, tandis que le second embrayage 104 est en prise, la vitesse de l'arbre de sortie 13 est maximale. Aussi, en désaccouplant la grande roue de sortie de basse vitesse 116 de l'arbre de sortie 13, on porte au repos la grande roue de sortie de basse vitesse 116 et les première et seconde petites roues d'embrayage de basse vitesse 96, 110. Si elles ne sont pas portées au repos, leurs vitesses est alors très importante et de l'ordre de 20 000 tr/min. Et en pareilles circonstances, leur usure est accélérée. Ainsi, grâce au désaccouplement, on préserve les première et seconde petites roues d'embrayage de basse vitesse 96, 110 d'un vieillissement prématuré.

Il est également avantageux de libérer les première et seconde petites roues d'embrayage de basse vitesse 96, 110 vis-à-vis de l'arbre de sortie 13, avant d'atteindre les vitesses extrêmes, lorsque le premier arbre d'embrayage de sortie 90 par l'intermédiaire de la première grande roue d'embrayage de haute vitesse 94 provoque l'entraînement de l'arbre de sortie 13. Les première et seconde petites roues d'embrayage de basse vitesse 96, 110, sont ainsi au repos sur une plus large gamme de vitesses et par conséquent elles sont mieux préservées.

De surcroît, en diminuant le nombre d'éléments mécaniques en mouvement, on améliore le rendement mécanique de l'ensemble de boîte de vitesses 10 conforme à l'invention.

En outre, l'arbre de sortie 13 présente une extrémité de sortie terminée par un pignon conique 120 pour pouvoir être relié mécaniquement à un différentiel non représenté. L'arbre de sortie est également équipé d'une roue de sortie 122 destinée à être couplée en rotation à un arbre d'entraînement d'autres roues 124 par l'intermédiaire d'un embrayage de quatre roues motrices 126. Ce dernier présente une roue d'entrée 125. Autrement dit, outre les deux-roues arrière du véhicule agricole motorisé, lesquelles sont entraînées à travers le pignon conique 120, les deux roues avant du véhicule agricole motorisé, sont entraînées par l'intermédiaire de l'arbre d'entraînement d'autres roues 124.

Selon le premier mode de réalisation dans lequel la boîte de vitesses 10 fournit vingt-un rapports de vitesse, et selon une première variante, les, roue de sortie 122 et roue d'entrée 125, comprennent par exemple, respectivement, entre trente-quatre et trente-six dents et, entre soixante-cinq et soixante-sept dents. Selon une seconde variante les, roue de sortie 122 et roue d'entrée 125, comprennent par exemple, respectivement, entre trente-trois et trente-cinq et, entre soixante-six et soixante-huit dents. S'agissant du second mode de réalisation dans lequel la boîte de vitesses 10 fournit vingt-huit rapports de vitesse, et selon une première variante, les, roue de sortie 122 et roue d'entrée 125, comprennent par exemple, respectivement, entre quarante-sept et quarante-neuf et, entre soixante-dix-sept et soixante-dix-neuf dents. Selon une seconde variante les, roue de sortie 122 et roue d'entrée 125, comprennent par exemple, respectivement, entre trente-neuf et quarante-et-une et, entre soixante-sept et soixante-neuf dents.

De plus, l'ensemble de boîte de vitesses 10 comporte un axe moteur 128, couplé par exemple directement à l'arbre d'entrée 11, et qui traverse axialement et librement le système de train épicycloïdaux étagé 12, le module réducteur de transmission 14 et le module inverseur de marche 15, et ce successivement à travers : le premier tronçon d'arbre creux 20, le tronçon d'arbre creux intermédiaire 34, le dernier tronçon d'arbre creux 44, le tronçon d'arbre creux de réduction 60 pour pouvoir venir déboucher au droit des deux dispositifs d'embrayage parallèles 16, 18. Grâce à l'axe moteur 128, on peut venir entraîner notamment les pompes hydrauliques, non représentées, grâce à des organes d'entraînement situés non pas dans le prolongement axial des dispositifs d'embrayage parallèles 16, 18, mais sensiblement au droit des embrayages commandables 88, 104. Aussi, ces organes d'entraînement comprennent une roue d'entraînement de pompe 130 couplée à l'axe moteur 128 par l'intermédiaire d'une roue de transfert 132 montée folle sur le second arbre d'embrayage de sortie 106, entre le seconde embrayage commandable 104 et la seconde grande roue d'embrayage de haute vitesse 108, laquelle roue de transfert 132 engrène une roue de transmission 134 solidaire de l'axe moteur 128. Ainsi, l'ensemble de boîte de vitesses est sensiblement raccourci axialement. Cette possibilité nous est offerte car le second embrayage commandable 104 est plus court que le premier 88 et il permet ainsi de libérer un espace pour monter la roue de transfert 132.

En outre, les, roue d'entraînement de pompe 130, roue de transfert 132 et roue de transmission 134, comprennent par exemple et respectivement, entre vingt-quatre et vingt-six dents, entre cinquante-trois et cinquante-six dents et, entre trente-quatre et trente-six dents.

## Revendications

1. Ensemble de boîte de vitesse (10) pour véhicule agricole motorisé comprenant :
- un système de trains épicycloïdaux étagés (12) pour fournir une pluralité de premiers rapports de transmission ;
- un dispositif d'embrayage (16) comportant, un arbre d'embrayage d'entrée (86) couplé audit système de trains épicycloïdaux étagés (12) et un arbre d'embrayage de sortie (90) ;
- une grande roue d'embrayage de haute vitesse (94) et une petite roue d'embrayage de basse vitesse (96) montées folles sur ledit arbre d'embrayage de sortie (90) pour pouvoir fournir deux deuxièmes rapports de transmission ;
- un dispositif d'accouplement d'embrayage (98) pour pouvoir coupler l'une ou l'autre desdites roues de basse (96) et de haute (94) vitesses avec ledit arbre d'embrayage de sortie (90) ;
- un arbre de sortie (13) comportant une petite roue de sortie de haute vitesse (114) engrenant avec ladite grande roue d'embrayage de haute vitesse (94) et une grande roue de sortie de basse vitesse (116) engrenant avec ladite petite roue d'embrayage de basse vitesse (96);
**caractérisé en ce qu'**il comprend en outre un dispositif de découplage (118) entre ledit arbre de sortie (13) et ladite grande roue de sortie de basse vitesse (116) pour pouvoir libérer ledit arbre de sortie (13) de ladite petite roue d'embrayage de basse vitesse (96).

2. Ensemble de boîte de vitesse selon la revendication 1, **caractérisé en ce que** ladite grande roue de sortie de basse vitesse (116) est montée folle sur ledit arbre de sortie (13).

3. Ensemble de boîte de vitesse selon la revendication 1, **caractérisé en ce que** ledit dispositif de découplage (118) comprend une roue fixe solidaire dudit arbre de sortie (13) et un organe de couplage solidaire de ladite roue fixe apte à être commandé pour mettre en prise ladite roue fixe et ladite grande roue de sortie de basse vitesse (116).

4. Ensemble de boîte de vitesse selon l'une quelconque des revendications 1 à 3, **caractérisé en ce que** ledit dispositif d'embrayage (16) comprend un embrayage commandable (88) situé entre ledit arbre d'embrayage d'entrée (86) et ledit arbre d'embrayage de sortie (90).

5. Ensemble de boîte de vitesse selon l'une quelconque des revendications 1 à 4, **caractérisé en ce qu'**il comprend en outre :
- un autre dispositif d'embrayage (18) comportant, un autre arbre d'embrayage d'entrée (102) couplé audit système de trains épicycloïdaux (12) et un autre arbre d'embrayage de sortie (106) ;
- une autre grande roue d'embrayage de haute vitesse (108) et une autre petite roue d'embrayage de basse vitesse (110) montées folles sur ledit autre arbre d'embrayage de sortie (106) pour pouvoir fournir deux autres deuxièmes rapports de transmission, lesdites autres grande (108) et petite roues (110) d'embrayage de haute et de basse vitesse engrenant respectivement avec lesdites petite (114) et grande (116) roues de sortie de haute et de basse vitesse ; et,
- un autre dispositif d'accouplement d'embrayage (112) pour pouvoir accoupler l'une ou l'autre desdites autres roues de basse (110) et de haute (108) vitesses avec ledit autre arbre d'embrayage de sortie (106).

6. Ensemble de boîte de vitesse selon la revendication 5, **caractérisé en ce que** ledit autre dispositif d'embrayage (18) comprend un autre embrayage commandable (104) situé entre ledit autre arbre d'embrayage d'entrée (102) et ledit autre arbre d'embrayage de sortie (106).

7. Ensemble de boîte de vitesse selon l'une quelconque des revendications 1 à 6, **caractérisé en ce qu'**il comprend en outre un module inverseur (15) situé entre ledit système de trains épicycloïdaux étagés (12) et ledit dispositif d'embrayage (16) pour pouvoir inverser le sens de rotation dudit arbre d'embrayage d'entrée (86, 102).

8. Ensemble de boîte de vitesse selon la revendication 7, **caractérisé en ce que** ledit module inverseur (15) comprend d'une part un arbre de réception (75) couplé audit système de trains épicycloïdaux étagés (12) et d'autre part, deux roues d'inversion (78, 80) montées folles sur ledit arbre de réception (75) et deux embrayages d'inversion pour pouvoir alternativement coupler lesdites deux roues d'inversion (78, 80) audit dispositif d'embrayage.

9. Ensemble de boîte de vitesse selon l'une quelconque des revendications 1 à 8, **caractérisé en ce qu'**il comprend en outre un module réducteur de transmission (14) situé entre ledit système de trains épicycloïdaux étagés (12) et ledit dispositif d'embrayage (16) pour pouvoir réduire les rapports de transmission de ladite pluralité de rapports de transmission.

10. Ensemble de boîte de vitesse selon l'une quelconque des revendications 1 à 9, **caractérisé en ce que** ledit système de trains épicycloïdaux étagés (12) comprend trois jeux de roues planétaires (22, 28 ; 46, 38 ; 52, 54) et trois jeu de roues satellites (26 ; 40 ; 50) montés respectivement dans lesdits trois jeux de roues planétaires (22, 28 ; 46, 38 ; 52, 54).

## Patentansprüche

1. Getriebeanordnung (10) für ein motorisiertes landwirtschaftliches Fahrzeug, umfassend:
- ein System gestufter Umlaufrädergetriebe (12), um eine Vielzahl von ersten Übersetzungsverhältnissen bereitzustellen;
- eine Kupplungsvorrichtung (16), umfassend eine Eingangskupplungswelle (86), die an das System gestufter Umlaufrädergetriebe (12) gekuppelt ist, und eine Ausgangskupplungswelle (90);
- ein großes Kupplungsrad hoher Geschwindigkeit (94) und ein kleines Kupplungsrad niedriger Geschwindigkeit (96), die freilaufend auf der Ausgangskupplungswelle (90) angebracht sind, um zwei zweite Übersetzungsverhältnisse bereitstellen zu können;
- eine Kupplungseinkupplungsvorrichtung (98), um das eine oder das andere der Räder niedriger (96) und hoher (94) Geschwindigkeit mit der Ausgangskupplungswelle (90) kuppeln zu können;
- eine Ausgangswelle (13), umfassend ein kleines Ausgangsrad hoher Geschwindigkeit (114), das mit dem großen Kupplungsrad hoher Geschwindigkeit (94) in Eingriff ist, und ein großes Ausgangsrad niedriger Geschwindigkeit (116), das mit dem kleinen Kupplungsrad niedriger Geschwindigkeit (96) in Eingriff ist;
**dadurch gekennzeichnet, dass** sie ferner eine Auskupplungsvorrichtung (118) zwischen der Ausgangswelle (13) und dem großen Ausgangsrad niedriger Geschwindigkeit (116) umfasst, um die Ausgangswelle (13) von dem kleinen Kupplungsrad niedriger Geschwindigkeit (96) auszurücken.

2. Getriebeanordnung nach Anspruch 1, **dadurch gekennzeichnet, dass** das große Ausgangsrad niedriger Geschwindigkeit (116) freilaufend auf der Ausgangswelle (13) angebracht ist.

3. Getriebeanordnung nach Anspruch 1, **dadurch gekennzeichnet, dass** die Auskupplungsvorrichtung (118) ein starr angebrachtes Rad der Ausgangswelle (13) und ein fest verbundenes Kupplungselement des Festrads umfasst, das gesteuert werden kann, um das Festrad und das große Ausgangsrad niedriger Geschwindigkeit (116) in Eingriff zu bringen.

4. Getriebeanordnung nach einem beliebigen der Ansprüche 1 bis 3, **dadurch gekennzeichnet, dass** die Kupplungsvorrichtung (16) eine steuerbare Kupplung (88) umfasst, die sich zwischen der Kupplungseingangswelle (86) und der Ausgangskupplungswelle (90) befindet.

5. Getriebeanordnung nach einem beliebigen der Ansprüche 1 bis 4, **dadurch gekennzeichnet, dass** sie ferner umfasst:
- eine weitere Kupplungsvorrichtung (18), umfassend eine weitere Eingangskupplungswelle (102), die an das System von Umlaufrädergetrieben (12) gekuppelt ist, und eine weitere Ausgangskupplungswelle (106);
- ein weiteres großes Kupplungsrad hoher Geschwindigkeit (108) und ein weiteres kleines Kupplungsrad niedriger Geschwindigkeit (110), die freilaufend auf der weiteren Ausgangskupplungswelle (106) angebracht sind, um zwei weitere zweite Übersetzungsverhältnisse bereitstellen zu können, wobei die weiteren großen (108) und kleinen (110) Kupplungsräder hoher und niedriger Geschwindigkeit jeweils mit den kleinen (114) und großen (116) Ausgangsrädern hoher und niedriger Geschwindigkeit in Eingriff sind; und
- eine weitere Kupplungseinkupplungsvorrichtung (112), um das eine oder das andere der weiteren Räder niedriger (110) und hoher (108) Geschwindigkeit mit der weiteren Ausgangskupplungswelle (106) kuppeln zu können.

6. Getriebeanordnung nach Anspruch 5, **dadurch gekennzeichnet, dass** die weitere Kupplungsvorrichtung (18) eine weitere steuerbare Kupplung (104) umfasst, die sich zwischen der weiteren Eingangskupplungswelle (102) und der weiteren Ausgangskupplungswelle (106) befindet.

7. Getriebeanordnung nach einem beliebigen der Ansprüche 1 bis 6, **dadurch gekennzeichnet, dass** sie ferner ein Umkehrmodul (15) umfasst, das sich zwischen dem System gestufter Umlaufrädergetriebe (12) und der Kupplungsvorrichtung (16) befindet, um die Drehrichtung der Eingangswelle (86, 102) umkehren zu können.

8. Getriebeanordnung nach Anspruch 7, **dadurch gekennzeichnet, dass** das Umkehrmodul (15) einerseits eine Aufnahmewelle (75), die an das System gestufter Umlaufrädergetriebe (12) gekuppelt ist, und andererseits zwei Umkehrräder (78, 80), die freilaufend auf der Aufnahmewelle (75) angebracht sind, und zwei Umkehrkupplungen umfasst, um alternativ die beiden Umkehrräder (78, 80) an die Kupplungsvorrichtung kuppeln zu können.

9. Getriebeanordnung nach einem beliebigen der Ansprüche 1 bis 8, **dadurch gekennzeichnet, dass** sie ferner ein Untersetzungsgetriebemodul (14) umfasst, das sich zwischen dem System gestufter Umlaufrädergetriebe (12) und der Kupplungsvorrichtung (16) befindet, um die Übersetzungsverhältnisse der Vielzahl von Übersetzungsverhältnissen reduzieren zu können.

10. Getriebeanordnung nach einem beliebigen der Ansprüche 1 bis 9, **dadurch gekennzeichnet, dass** das System gestufter Umlaufrädergetriebe (12) drei Sätze von Sonnen- und Hohlrädern (22, 28; 46, 38; 52, 54) und drei Sätze von Umlaufrädern (26; 40; 50) umfasst, die jeweils in den drei Sätzen von Sonnen- und Hohlrädern (22, 28; 46, 38; 52, 54) angebracht sind.

## Claims

1. A gear box assembly (10) for motorized agricultural vehicle comprising:
a staggered epicyclic gear device (12) to provide a plurality of first transmission ratios ;
a clutch device (16) including an inlet clutch shaft (86) coupled to said staggered epicyclic gear device (12) and an exit clutch shaft (90) ;
a large high speed clutch gear (94) and a small low speed clutch gear (96) freely fitted on said exit clutch shaft (90) in order to provide two second transmission ratios ;
a clutch coupling device (98) intended to couple either one of said low (96) and high (94) speed gears with said exit clutch shaft (90) ;
an output shaft (13) including a small high speed exit gear (114) being engaged with said large high speed clutch gear (94) and a large low speed exit gear (116) being engaged with said small low speed clutch gear (96) ;
**characterized in that** it further comprises an uncoupling device (118) between said output shaft (13) and said large low speed exit gear (116) in order to release said output shaft (13) from said small low speed clutch gear (96).

2. The gear box assembly according to claim 1, **characterized in that** said large low speed exit gear (116) is freely fitted onto said output shaft (13).

3. The gear box assembly according to claim 1, **characterized in that** said uncoupling device (118) comprises a fixed gear unitary with said output shaft (13) and a coupling member unitary with said fixed gear ready to be ordered to engage said fixed gear and said large low speed exit gear (116).

4. The gear box assembly according to any of claims 1 to 3, **characterized in that** said clutch device (16) comprises a controllable clutch (88) located between said inlet clutch shaft (86) and said exit clutch shaft (90).

5. The gear box assembly according to any of claims 1 to 4, **characterized in that** it further comprises:
another clutch device (18), including another inlet clutch shaft (102) coupled to said epicyclic gear device (12) and another exit clutch shaft (106) ;
another large high speed clutch gear (108) and another small low speed clutch gear (110) freely fitted onto said another exit clutch shaft (106) to be able to provide two other second transmission ratios, said other large (108) and small (110) high and low speed clutch gears being respectively engaged with said small (114) and large (116) high and low speed exit gears ; and,
another clutch coupling device (112) to be able to couple either one of said other low (110) and high (108) speed gears with said other exit clutch shaft (106).

6. The gear box assembly according to claim 5, **characterized in that** said another clutch device (18) comprises another controllable clutch (104) located between said other inlet clutch shaft (102) and said other exit clutch shaft (106).

7. The gear box assembly according to any of claims 1 to 6, **characterized in that** it further comprises a reverser module (15) located between said staggered epicyclic gear device (12) and said clutch device (16) to be able to reverse the rotation direction of said inlet clutch shaft (86, 102).

8. The gear box assembly according to claim 7, **characterized in that** said reverser module (15) comprises, on the one hand, a reception shaft (75) coupled to said staggered epicyclic gear device (12) and, on the other hand, two inversion gears (78, 80) freely fitted on said reception shaft (75) and two inversion clutches to be able to alternatively couple said two inversion gears (78, 80) to said clutch device.

9. The gear box assembly according to any of claims 1 to 8, **characterized in that** it further comprises a transmission reducing module (14) located between said staggered epicyclic gear device (12) and said clutch device (16) in order to be able to reduce the transmission ratios of said plurality of transmission ratios.

10. The gear box assembly according to any of claims 1 to 9, **characterized in that** said staggered epicyclic gear device (12) comprises three sets of solar gears (22, 28 ; 46, 38 ; 52, 54) and three set of planet gears (26 ; 40 ; 50) respectively fitted within said three sets of solar gears (22, 28 ; 46, 38 ; 52, 54).
